# EUROPEAN PATENT APPLICATION

(11) **EP 2 728 118 A2**
(43) Date of publication of application: **07.05.2014**
(21) Application number: 13190886.5
(22) Date of filing: 30.10.2013
(51) Int. Cl.: F01D 5/18, F01D 5/28

(54) **Components with asymmetric cooling channels and methods of manufacture**

(30) Priority: 31.10.2012 US 201213664458
(71) Applicant: General Electric Company, Schenectady, New York 12345 (US)
(72) Inventor: Butler, Jesse Blair, Niskayuna, NY New York 12309 (US); Bunker, Ronald Scott, Niskayuna, NY New York 12309 (US); Weaver, Scott Andrew, Niskayuna, NY New York 12309 (US); Kirtley, Kevin Richard, Niskayuna, NY New York 12309 (US)
(74) Representative: Cleary, Fidelma

(57) **Abstract**

A method of fabricating a component (100) is provided. The component includes a substrate (110) having an outer surface (112) and an inner surface (116), where the inner surface defines at least one interior space (114). The fabrication method includes forming at least one groove (132) in the outer substrate surface. Each groove extends at least partially along the outer substrate surface and has an asymmetric cross-section. The method further includes forming at least one access hole (140) in the substrate. Each access hole connects the respective groove in fluid communication with the respective interior space. A coating (150,54) is disposed over at least a portion of the substrate surface, such that the groove(s) and the coating together define one or more channels for cooling the component. A component is also disclosed and has at least one groove with an asymmetric cross-section.

## Description

### BACKGROUND

The invention relates generally to gas turbine engines, and, more specifically, to micro-channel cooling therein.

In a gas turbine engine, air is pressurized in a compressor and mixed with fuel in a combustor for generating hot combustion gases. Energy is extracted from the gases in a high pressure turbine (HPT), which powers the compressor, and in a low pressure turbine (LPT), which powers a fan in a turbofan aircraft engine application, or powers an external shaft for marine and industrial applications.

Engine efficiency increases with temperature of combustion gases. However, the combustion gases heat the various components along their flowpath, which in turn requires cooling thereof to achieve an acceptably long engine lifetime. Typically, the hot gas path components are cooled by bleeding air from the compressor. This cooling process reduces engine efficiency, as the bled air is not used in the combustion process.

Gas turbine engine cooling art is mature and includes numerous patents for various aspects of cooling circuits and features in the various hot gas path components. For example, the combustor includes radially outer and inner liners, which require cooling during operation. Turbine nozzles include hollow vanes supported between outer and inner bands, which also require cooling. Turbine rotor blades are hollow and typically include cooling circuits therein, with the blades being surrounded by turbine shrouds, which also require cooling. The hot combustion gases are discharged through an exhaust which may also be lined and suitably cooled.

In all of these exemplary gas turbine engine components, thin walls of high strength superalloy metals are typically used to reduce component weight and minimize the need for cooling thereof. Various cooling circuits and features are tailored for these individual components in their corresponding environments in the engine. For example, a series of internal cooling passages, or serpentines, may be formed in a hot gas path component. A cooling fluid may be provided to the serpentines from a plenum, and the cooling fluid may flow through the passages, cooling the hot gas path component substrate and any associated coatings. However, this cooling strategy typically results in comparatively low heat transfer rates and non-uniform component temperature profiles.

Micro-channel cooling has the potential to significantly reduce cooling requirements by placing the cooling as close as possible to the heated region, thus reducing the temperature difference between the hot side and cold side of the main load bearing substrate material for a given heat transfer rate. For certain applications, it is desirable to form channels with narrow openings to enhance the integrity of coatings deposited over the channels.

It would therefore be desirable to form micro-channels in a hot gas path component with relatively narrower openings.

### BRIEF DESCRIPTION

One aspect of the present invention resides in a method of fabricating a component, where the component includes a substrate having an outer surface and an inner surface, where the inner surface defines at least one interior space. The fabrication method includes forming at least one groove in the outer surface of the substrate. Each groove extends at least partially along the outer surface of the substrate and has an asymmetric cross-section. The fabrication method further includes forming at least one access hole in the substrate, where each access hole connects the respective groove in fluid communication with the respective interior space and disposing a coating over at least a portion of the surface of the substrate, such that the groove(s) and the coating together define one or more channels for cooling the component. Another aspect of the invention resides in a method of fabricating a component, where the component includes a substrate having an outer surface and an inner surface, where the inner surface defines at least one interior space. The fabrication method includes disposing a structural coating on the outer surface of the substrate, and forming at least one groove at least partially in the structural coating. Each groove extends at least partially along the outer surface of the structural coating and has an asymmetric cross-section. The fabrication method further includes forming at least one access hole in the substrate. Each access hole connects the groove in fluid communication with the respective interior space. The fabrication method further includes disposing a coating over at least a portion of the surface of the structural coating, such that the groove(s) and the coating together define one or more channels for cooling the component.

Yet another aspect of the invention resides in a component that includes a substrate having an outer surface and an inner surface, where the inner surface defines at least one interior space. At least one groove extends at least partially along the outer surface of the substrate and has an asymmetric cross-section. At least one access hole is formed in the substrate and connects each groove in fluid communication with the respective interior space. At least one coating is disposed over at least a portion of the surface of the substrate, such that the groove(s) and the coating together define one or more channels for cooling the component.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic illustration of a gas turbine system;
FIG. 2 is a schematic cross-section of an example airfoil configuration with re-entrant shaped cooling channels, in accordance with aspects of the present invention;
FIG. 3 schematically depicts, in perspective view, three example micro-channels that extend partially along the surface of the substrate and channel coolant to respective film cooling holes;
FIG. 4 schematically depicts an exemplary tooling path for forming a groove and a tapered, run-out region at the discharge end of the groove;
FIGS. 5-7 schematically depicts three exemplary asymmetric cross-sectional geometries for cooling channels, in accordance with aspects of the present invention;
FIG. 8 schematically depicts an exemplary coating process, where the coating is deposited at an angle of incidence that is approximately normal to an axis of inclination for the groove;
FIG. 9 schematically depicts an exemplary coating process, where the coating is deposited at an angle of incidence that is approximately normal to the substrate; and
FIG. 10 shows asymmetric channels with permeable slots formed in a structural coating.

### DETAILED DESCRIPTION

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The modifier "about" used in connection with a quantity is inclusive of the stated value, and has the meaning dictated by context, (e.g., includes the degree of error associated with measurement of the particular quantity). In addition, the term "combination" is inclusive of blends, mixtures, alloys, reaction products, and the like.

Moreover, in this specification, the suffix "(s)" is usually intended to include both the singular and the plural of the term that it modifies, thereby including one or more of that term (e.g., "the passage hole" may include one or more passage holes, unless otherwise specified). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. Similarly, reference to "a particular configuration" means that a particular element (e.g., feature, structure, and/or characteristic) described in connection with the configuration is included in at least one configuration described herein, and may or may not be present in other configurations. In addition, it is to be understood that the described inventive features may be combined in any suitable manner in the various embodiments and configurations.

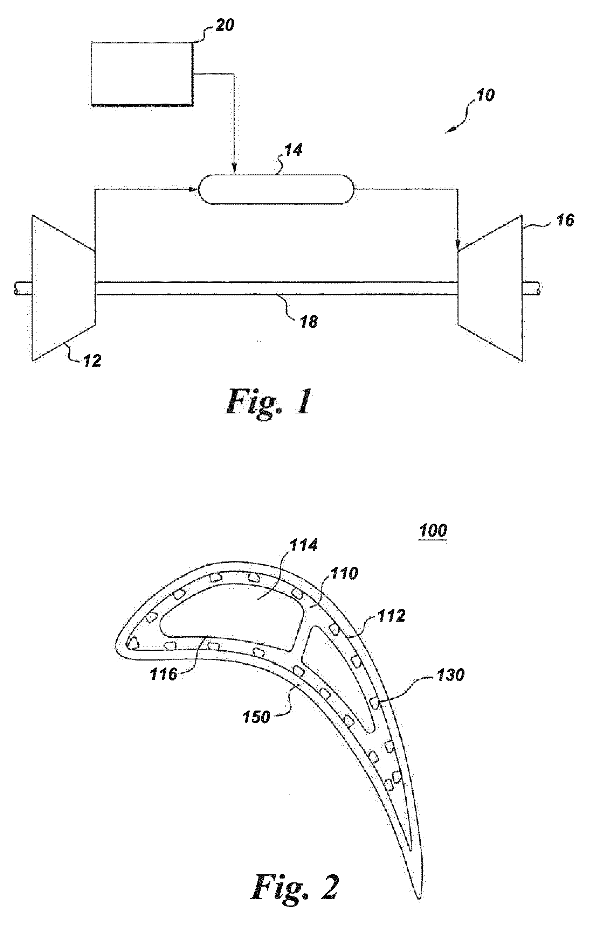

FIG. 1 is a schematic diagram of a gas turbine system 10. The system 10 may include one or more compressors 12, combustors 14, turbines 16, and fuel nozzles 20. The compressor 12 and turbine 16 may be coupled by one or more shafts 18.

The gas turbine system 10 may include a number of hot gas path components 100. A hot gas path component is any component of the system 10 that is at least partially exposed to a flow of high temperature gas through the system 10. For example, bucket assemblies (also known as blades or blade assemblies), nozzle assemblies (also known as vanes or vane assemblies), shroud assemblies, transition pieces, retaining rings, and turbine exhaust components are all hot gas path components. However, it should be understood that the hot gas path component 100 of the present invention is not limited to the above examples, but may be any component that is at least partially exposed to a flow of high temperature gas. Further, it should be understood that the hot gas path component 100 of the present disclosure is not limited to components in gas turbine systems 10, but may be any piece of machinery or component thereof that may be exposed to high temperature flows.

When a hot gas path component 100 is exposed to a hot gas flow, the hot gas path component 100 is heated by the hot gas flow and may reach a temperature at which the hot gas path component 100 is substantially degraded or fails. Thus, in order to allow system 10 to operate with hot gas flow at a high temperature, as required to achieve the desired efficiency, performance and/or life of the system 10, a cooling system for the hot gas path component 100 is needed.

In general, the cooling system of the present disclosure includes a series of small channels, or micro-channels, formed in the surface of the hot gas path component 100. For industrial sized power generating turbine components, "small" or "micro" channel dimensions would encompass approximate depths and widths in the range of 0.25 mm to 1.5 mm, while for aviation sized turbine components channel dimensions would encompass approximate depths and widths in the range of 0.1 mm to 0.5 mm. The hot gas path component may be provided with a protective coating. A cooling fluid may be provided to the channels from a plenum, and the cooling fluid may flow through the channels, cooling the hot gas path component.

A fabrication method is described with reference to FIGS. 2-10. As indicated for example in FIG. 2, the method is for fabricating a component 100 that includes a substrate 110 having an outer surface 112 and an inner surface 116. As shown in FIG. 2, the inner surface 116 defines at least one interior space 114.

The substrate 110 is typically cast prior to forming the groove(s) 132. As discussed in US Patent No. 5,626,462, Melvin R. Jackson et al., "Double-wall airfoil," which is incorporated herein in its entirety, substrate 110 may be formed from any suitable material. Depending on the intended application for component 100, this could include Ni-base, Co-base and Fe-base superalloys. The Ni-base superalloys may be those containing both γ and γ' phases, particularly those Ni-base superalloys containing both γ and γ' phases wherein the γ' phase occupies at least 40% by volume of the superalloy. Such alloys are known to be advantageous because of a combination of desirable properties including high temperature strength and high temperature creep resistance. The substrate material may also comprise a NiAl intermetallic alloy, as these alloys are also known to possess a combination of superior properties including high-temperature strength and high temperature creep resistance that are advantageous for use in turbine engine applications used for aircraft. In the case of Nb-base alloys, coated Nb-base alloys having superior oxidation resistance will be preferred, particularly those alloys comprising Nb-(27-40)Ti-(4.5-10.5)Al-(4.5-7.9)Cr-(1.5-5.5)Hf-(0-6)V, where the composition ranges are in atom per cent. The substrate material may also comprise a Nb-base alloy that contains at least one secondary phase, such as a Nb-containing intermetallic compound comprising a silicide, carbide or boride. Such alloys are composites of a ductile phase (i.e., the Nb-base alloy) and a strengthening phase (i.e., a Nb-containing intermetallic compound). For other arrangements, the substrate material comprises a molybdenum based alloy, such as alloys based on molybdenum (solid solution) with Mo₅SiB₂ and/or Mo₃Si second phases. For other configurations, the substrate material comprises a ceramic matrix composite (CMC), such as a silicon carbide (SiC) matrix reinforced with SiC fibers. For other configurations the substrate material comprises a TiAl-based intermetallic compound.

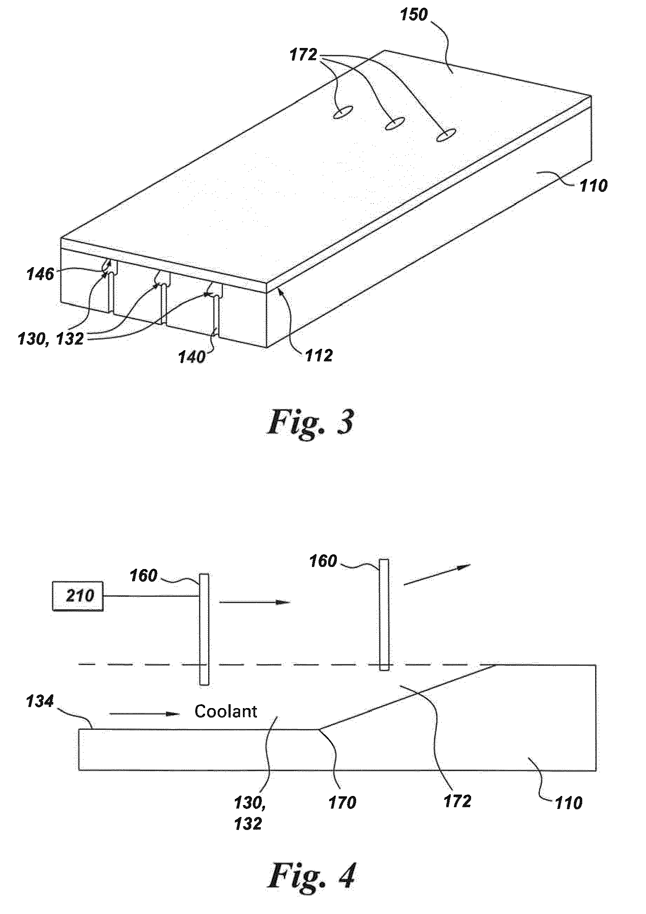

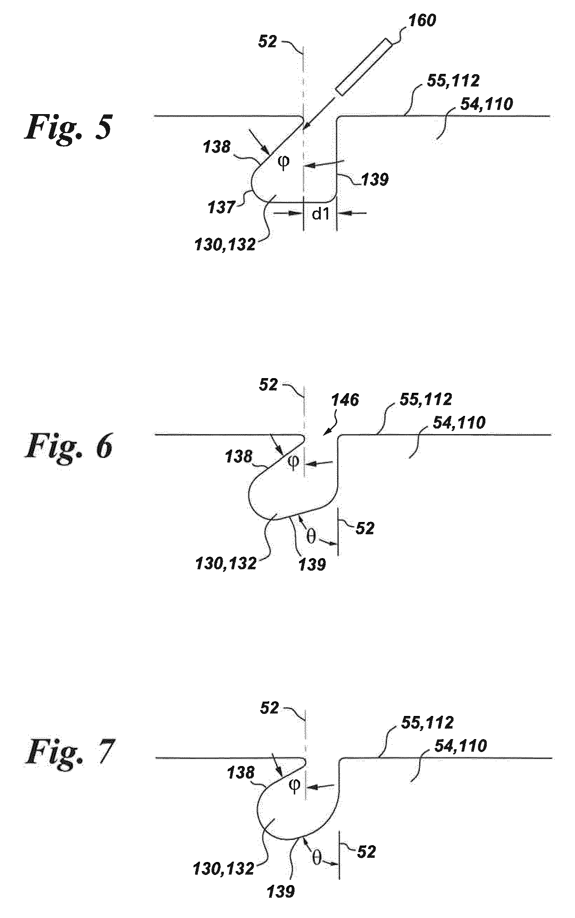

Referring now to FIG. 3, the fabrication method includes forming at least one groove 132 in the outer surface 112 of the substrate 110. As indicated, for example, in FIG. 3, each groove 132 extends at least partially along the outer surface 112 of the substrate 110 and has an asymmetric cross-section. For the configuration shown in FIG. 3, the grooves channel coolant to respective film cooling holes 172. Example techniques for forming groove(s) 132 include, without limitation, abrasive liquid jet, plunge electrochemical machining (ECM), electric discharge machining (EDM) with a spinning electrode (milling EDM) and laser machining. Example laser machining techniques are described in commonly assigned, US Patent Application Ser. No. 12/697,005, "Process and system for forming shaped air holes" filed January 29, 2010, which is incorporated by reference herein in its entirety. Example EDM techniques are described in commonly assigned US Patent Application Ser. No. 12/790,675, "Articles which include chevron film cooling holes, and related processes," filed May 28, 2010, which is incorporated by reference herein in its entirety. Formation of the groove(s) 132 using abrasive liquid jet is discussed in greater detail below, with reference to FIGS. 4 and 5. Beneficially, by favoring one side of the geometry, the tool used in the machining process need only be angled in one direction from the normal rather than in opposite directions, thereby decreasing the resultant opening width of the channel.

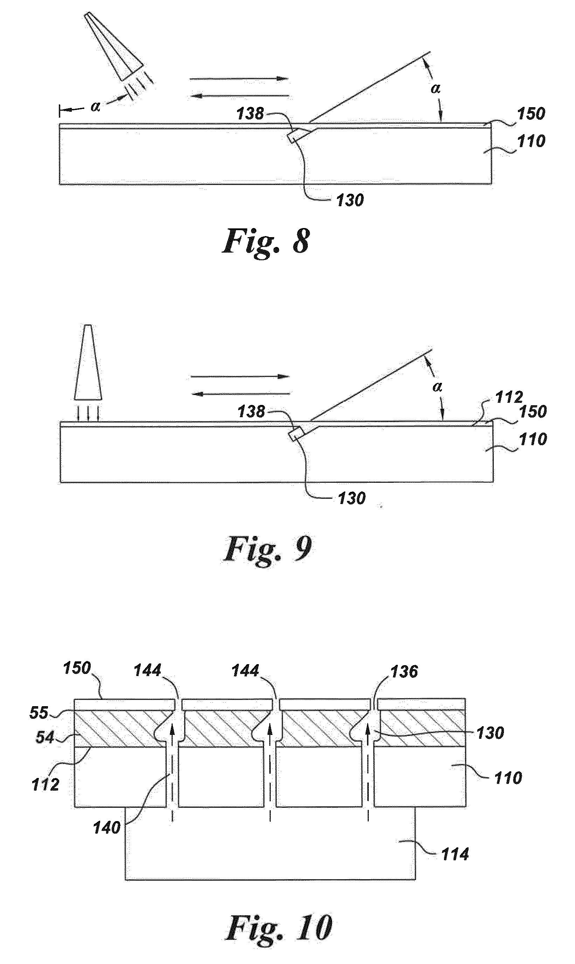

As indicated in FIG. 3, for example the fabrication method further includes forming at least one access hole 140 in the substrate 110. As show, for example, in FIG. 10, each access hole 140 connects the respective groove 132 in fluid communication with the respective interior space 114. It should be noted that the holes 140 shown in FIG. 3 are discrete holes located in the cross-section shown and do not extend through the substrate along the length of the grooves 132.

The interior access holes 140 supplying the respective grooves may be drilled either as a straight hole of constant cross section, a shaped hole (elliptical etc.), or a converging or diverging hole. Methods for forming the access holes are provided in commonly assigned US Patent Application Ser. No. 13/210,697, Ronald S. Bunker et al., "Components with cooling channels and methods of manufacture," which is incorporated by reference herein in its entirety. For particular processes, the access hole(s) 140 may be formed using abrasive liquid jet, which is described in detail below.

Referring now to FIG. 3, the fabrication method further includes disposing a coating 150 over at least a portion of the surface 112 of the substrate 110, such that the groove(s) 132 and the coating 150 together define one or more channels 130 for cooling the component 100. The coating 150 comprises structural coating layers and may further include optional additional coating layer(s). The coating layer(s) may be deposited using a variety of techniques. For particular processes, the structural coating may be deposited by performing ion plasma deposition (also known in the art as cathodic arc deposition). Example ion plasma deposition apparatus and method are provided in commonly assigned, US Published Patent Application No. 10080138529, Weaver et al, "Method and apparatus for cathodic arc ion plasma deposition," which is incorporated by reference herein in its entirety. Briefly, ion plasma deposition comprises placing a consumable cathode having a composition to produce the desired coating material within a vacuum chamber, providing a substrate 110 within the vacuum environment, supplying a current to the cathode to form a cathodic arc upon a cathode surface resulting in arc-induced erosion of coating material from the cathode surface, and depositing the coating material from the cathode upon the substrate surface 112.

Non-limiting examples of a structural coating deposited using ion plasma deposition are described in US Patent No. 5,626,462, Jackson et al.,"Double-wall airfoil". For certain hot gas path components 100, the structural coating 54 comprises a nickel-based or cobalt-based alloy, and more particularly comprises a superalloy or a (Ni,Co)CrAlY alloy. Where the substrate material is a Ni-base superalloy containing both γ and γ' phases, structural coating may comprise similar compositions of materials, as discussed in US Patent No. 5,626,462. Additionally, for superalloys the structural coating 54 may comprise compositions based on the γ'-Ni₃Al family of alloys.

More generally, the structural coating composition will be dictated by the composition of the underlying substrate. For example, for CMC substrates, such as a silicon carbide (SiC) matrix reinforced with SiC fibers, the structural coating will typically include silicon.

For other process configurations, the structural coating is deposited by performing at least one of a thermal spray process and a cold spray process. For example, the thermal spray process may comprise combustion spraying or plasma spraying, the combustion spraying may comprise high velocity oxygen fuel spraying (HVOF) or high velocity air fuel spraying (HVAF), and the plasma spraying may comprise atmospheric (such as air or inert gas) plasma spray, or low pressure plasma spray (LPPS, which is also known as vacuum plasma spray or VPS). In one non-limiting example, a (Ni,Co)CrAlY coating is deposited by HVOF or HVAF. Other example techniques for depositing the structural coating include, without limitation, sputtering, electron beam physical vapor deposition, entrapment plating, and electroplating.

As indicated, for example, in FIG. 10, the manufacturing method may further include disposing an additional coating 150 over at least a portion of the surface 55 of the structural coating 54. It should be noted that this additional coating 150 may comprise one or more different coating layers. For example, the coating 150 may include an additional structural coating and/ or optional additional coating layer(s), such as bond coatings, thermal barrier coatings (TBCs) and oxidation-resistant coatings. For particular configurations, the additional coating 150 comprises an outer structural coating layer (which is also indicated by reference numeral 150).

For particular configurations, the structural coating 54 and additional coating 150 have a combined thickness in the range of 0.1-2.0 millimeters, and more particularly, in the range of 0.2 to 1 millimeter, and still more particularly 0.2 to 0.5 millimeters for industrial components. For aviation components, this range is typically 0.1 to 0.25 millimeters. However, other thicknesses may be utilized depending on the requirements for a particular component 100.

The coating layer(s) may be deposited using a variety of techniques. Example deposition techniques for forming structural coatings are provided above. In addition to structural coatings, bond coatings, TBCs and oxidation-resistant coatings may also be deposited using the above-noted techniques.

For certain configurations, it is desirable to employ multiple deposition techniques for depositing structural and optional additional coating layers. For example, a first structural coating layer may be deposited using an ion plasma deposition, and a subsequently deposited layer and optional additional layers (not shown) may be deposited using other techniques, such as a combustion thermal spray process or a plasma spray process. Depending on the materials used, the use of different deposition techniques for the coating layers may provide benefits in properties, such as, but not restricted to: strain tolerance, strength, adhesion, and/or ductility.

For particular processes, the coating 150 is applied at an angle of incidence that is approximately normal to the outer surface 112 of the substrate 110. See, for example, FIG. 9. As used here, "approximately normal" should be understood to mean within +/- 15° of the outer surface normal 52. Beneficially, by applying the coating in this manner for the angled, asymmetric groove shown in FIG. 9, the coating will not be deposited in the lower portion of the groove, although the coating may be deposited in the groove exit, as indicated in FIG. 9.

Similarly, for the process shown in FIG. 8, the coating 150 is applied at an angle of incidence α that is approximately orthogonal to the general angle of a short leg 138 of the respective groove 132. As used here, "approximately orthogonal" should be understood to mean within +/- 15° of being orthogonal to the general angle of the short leg 138. Beneficially, applying the coating in this manner for the angled, asymmetric groove shown in FIG. 8, effectively shields the lower portion of the groove, such that coating will not be deposited in the lower portion of the groove, but may be minimally coated in the top portion opening of the groove, as indicated in FIG. 8.

As noted above, a number of techniques may be used to form the grooves 132. For the exemplary process shown in FIGS. 4 and 5, each groove 132 is formed by directing an abrasive liquid jet 160 at the outer surface 112 of the substrate 110. As indicated in FIG. 5, at least one groove 132 is formed by directing the abrasive liquid jet 160 at a lateral angle relative to the surface 112 of the substrate 110, in one or more passes of the abrasive liquid jet 160. It should be noted that the groove may be generally formed around this lateral angle, but a more complex groove shape may be formed by adjusting the angle somewhat about the general direction using more than one pass of the abrasive liquid jet.

Example abrasive liquid jet drilling processes and systems are provided in commonly assigned US Patent Application Ser. No. 12/790,675, "Articles which include chevron film cooling holes, and related processes", filed May 28, 2010, which is incorporated by reference herein in its entirety. As explained in US Patent Application Ser. No. 12/790,675, the abrasive liquid jet process typically utilizes a high-velocity stream of abrasive particles (e.g., abrasive "grit"), suspended in a stream of high pressure water. The pressure of the liquid may vary considerably, but is often in the range of about 35-620 MPa. A number of abrasive materials can be used, such as garnet, aluminum oxide, silicon carbide, and glass beads. Beneficially, the capability of abrasive liquid jet machining techniques facilitates the removal of material in stages to varying depths and with control over the shape of the machined features. This allows the interior access holes 140 that supply the channel to be drilled either as a straight hole of constant cross section, a shaped hole (e.g., elliptical), or a converging or diverging hole (not shown).

In addition, and as explained in US Patent Application Ser. No. 12/790,675, the water jet system can include a multi-axis computer numerically controlled (CNC) unit 210 (FIG. 4). The CNC systems themselves are known in the art, and described, for example, in U.S. Patent Publication 1005/0013926 (S. Rutkowski et al), which is incorporated herein by reference in its entirety. CNC systems allow movement of the cutting tool along a number of X, Y, and Z axes, as well as the tilt axes.

In addition, the step of forming the groove 132 may further include performing at least one additional pass, where the abrasive liquid jet 160 is directed toward a base 134 of the groove 132 at one or more angles between the lateral angle and a direction 52 substantially normal to the outer surface 112 of the substrate 110, such that material is removed from the base 134 of the groove 132. It should be noted that as used here "base" is the lower portion of the groove, and includes the end portion 137 of the groove, where the two sides of the groove come together. For these asymmetric grooves, the base will typically be curved, at least in part, and will not be purely flat. See for example, FIGS. 6 and 7.

Previous micro-channel cooling strategies have focused on the creation of essentially symmetric channel shaping where the interior shape or volume is mirror-imaged about the channel centerline. Symmetry provides a natural means for the balancing of flow and thermal effects. Symmetry may never be fully achieved, but within reasonable tolerances of machine accuracy and method, prior channels may be deemed symmetric.

The asymmetric channels of the present invention provide machining and coating integrity benefits, as described in further detail herein. However, the decreased opening width will also lead to a lesser channel volume unless compensated for by other changes such as depth or shaping. Such shaping changes will also accommodate desired local stress concentration factor reductions.

The specific geometry of the groove will vary based on the specific application. However, for certain configurations the base 134 of a groove 132 is at least two times wider than the top 146 of the respective groove 132. For particular configurations, the base 134 is at least 3 times wider than the top 146 of the respective groove 132, and more particularly, is in a range of about 3-4 times wider than the top 146 of the respective groove 132.

For specific configurations, a first wall 138 of a respective groove 132 is oriented at an angle φ in a range of about 10-80 degrees relative to a surface normal 52. See, for example, FIGS. 5-7. For particular configurations, the wall 138 is oriented at an angle φ in a range of about 10-50 degrees relative to the surface normal 52. In addition, for specific configurations (see, for example, FIGS. 6 and 7), a second wall 139 of a respective groove 132 is oriented at an angle θ in a range of about 0-30 degrees relative to a surface normal 52. For the example arrangement shown in FIG. 8, the two walls 138, 139 are essentially parallel, and for other configurations, the second wall 139 may be oriented at an angle θ in a range of about 0-50 degrees relative to a surface normal 52.

In addition to forming grooves with an asymmetric cross-section in the substrate, as discussed above, grooves with asymmetric cross-sections may also be formed, at least partially in a structural coating. This alternative method of fabricating a component 100 is described with reference to FIGS. 2-10. As indicated in FIG. 2, the component 100 includes comprising a substrate 110 having an outer surface 112 and an inner surface 116. As shown in FIG. 2, the inner surface 116 defines at least one interior space 114. The substrate 110 is described above.

Beneficially, by so favoring one side of the geometry, the tool used in the machining process need only be angled in one direction from the normal rather than in opposite directions, thereby decreasing the resultant opening width of the channel. As the opening width of the channel is a key dimension in determining the integrity of the coatings applied over the channels, this reduced opening width may result in improved coating integrity over the channels. Additionally, when additional surface treatment is performed, such as peening, the initially smaller channel opening will be closed down relatively more, since only the one side of the channel (angled side) will be affected to any significant degree, more so as the angle of wall 138 is increased. Surface treatment of components with micro-channel cooling is described in commonly assigned US Patent Applications Ser. No. 13/242,179, Ronald Scott Bunker et al., entitled "Components with cooling channels and methods of manufacture," and Ser. No. 13/595,120, "Components with cooling channels and methods of manufacture," both of which US Patent Applications are incorporated herein in their entirety.

Referring now to FIG. 10, the fabrication method includes disposing a structural coating 54 on the outer surface 112 of the substrate 110. For example, the structural coating 54 may have a thickness of less than about 1.0 mm. The fabrication method may further optionally include performing a heat treatment after depositing the structural coating 54. As indicated in FIG. 10, for example, the fabrication method further includes forming at least one groove at least partially in the structural coating 54, where each groove 132 extends at least partially along the outer surface 55 of the structural coating 54 and has an asymmetric cross-section. The formation of grooves in a structural coating is described in commonly assigned, US Patent Application Ser. No. 13/052,415, Ronald S. Bunker et al., "Components with cooling channels formed in coating and methods of manufacture," which is incorporated herein by reference in its entirety. Example techniques for forming groove(s) 132 include, without limitation, abrasive liquid jet, plunge electrochemical machining (ECM), electric discharge machining (EDM) with a spinning electrode (milling EDM) and laser machining. The grooves can be formed using the techniques described above with reference to FIGS. 4 and 5.

Referring now to FIG. 10, the fabrication method further includes forming at least one access hole 140 in the substrate 110. As indicated in FIG. 10, each access hole 140 connects the groove 132 in fluid communication with the respective interior space 114. Access holes 140 are described above.

As indicated in FIG. 10, the fabrication method further includes disposing a coating 150 over at least a portion of the surface 55 of the structural coating 54, such that the groove(s) 132 and the coating 150 together define one or more channels 130 for cooling the component 100. For example the coating 150 may include an outer structural coating layer and optionally additional coating layers as well. For the arrangement shown in FIG. 10, access holes 140 connects the respective grooves 132 in fluid communication with the interior space 114.

Example techniques for depositing the coating are described above. For particular processes, the coating 150 is applied at an angle of incidence that is approximately normal to the outer surface 112 of the substrate 110. See, for example, FIG. 9. As used here, "approximately normal" should be understood to mean within +/- 15° of the outer surface normal 52. As noted above, by applying the coating in this manner for the angled, asymmetric groove shown in FIG. 9, the coating will not be deposited in the lower portion of the groove, although the coating may be deposited in the groove exit, as indicated in FIG. 9.

Similarly, for the process shown in FIG. 8, the coating 150 is applied at an angle of incidence α that is approximately orthogonal to the general angle of a short leg 138 of the respective groove 132. As used here, "approximately opposite" should be understood to mean within +/- 15° of being orthogonal to the general angle of the short leg 138. As noted above, applying the coating in this manner for the angled, asymmetric groove shown in FIG. 8, effectively shields the lower portion of the groove, such that coating will not be deposited in the lower portion of the groove but may be minimally coated in the top portion opening of the groove, as indicated in FIG. 8.

The grooves with asymmetric cross-sections may be formed partially or entirely within the structural coating 54. For the exemplary configuration shown in FIG. 10, the grooves 132 are located entirely within the structural coating 54. For other configurations (not expressly shown), the grooves 132 extend through the structural coating 54 into the substrate 110.

The grooves 132 formed at least partially in the structural coating 54 may have the same geometries described above for the grooves formed in the substrate. For example, for particular configurations, a first wall 138 of a respective groove 132 may be oriented at an angle φ in a range of about 10-80 degrees relative to a surface normal 52. See, for example, FIGS. 5-7. For particular configurations, the wall 138 may be oriented at an angle φ in a range of about 10-50 degrees relative to the surface normal 52. Similarly, for the particular configurations shown in FIGS. 6 and 7, a second wall 139 of a respective groove 132 is oriented at an angle θ in a range of about 0-30 degrees relative to a surface normal 52. For the example arrangement shown in FIG. 8, the two walls 138, 139 are essentially parallel, and for other configurations, the second wall 139 may be oriented at an angle θ in a range of about 0-50 degrees relative to a surface normal 52.

A component 100 embodiment of the invention is described with reference to FIGS. 2-10. As indicated in FIG. 2, for example, the component 100 includes a substrate 110 having an outer surface 112 and an inner surface 116. As indicated in FIG. 2, the inner surface 116 defines at least one interior space 114. The substrate is described above. As shown in FIG. 3, at least one groove 132 extends at least partially along the outer surface 112 of the substrate 110 and has an asymmetric cross-section. Grooves 132 are described above with reference to FIGS. 3-7 and 10. As described above with reference to FIG. 10, at least one access hole 140 is formed in the substrate 110 and connects each groove 132 in fluid communication with the respective interior space 114.

As indicated in FIG. 3, the component further includes at least one coating 150 disposed over at least a portion of the surface 112 of the substrate 110, such that the groove(s) 132 and the coating 150 together define one or more channels 130 for cooling the component 100. Coating 150 and suitable deposition techniques are described above. For particular configurations, the coating 150 comprises at least one of a structural coating, a bond coating, and a thermal barrier coating. For particular configurations, and as shown for example in FIG. 10, the coating 150 comprises at least an inner layer of a structural coating 54 disposed on the outer surface 112 of the substrate 110 and an additional coating layer (which is also indicated by reference numeral 150).

The coating may completely or only partially cover the grooves 132. For the configuration shown in FIG. 3, the coating 150 completely bridges the respective groove(s) 132, such that the coating 150 seals the respective micro-channel(s) 130. However, for the arrangement shown in FIG. 10, the coating 150 defines one or more porous gaps 144, such that the coating 150 does not completely bridge each groove 132.

As noted above, depending on the specific configuration, the grooves may be located entirely within the substrate, entirely within the structural coating, or partially in the structural coating and extending into the substrate. For the configuration shown in FIG. 10, the grooves 132 are formed at least partially in the structural coating 54. More specifically, for the particular configuration shown in FIG. 10, the grooves 132 are located entirely within the structural coating 54. For other configurations (not expressly shown), the grooves 132 are formed partially in the structural coating 54 and extend through the structural coating 54 into the substrate 110. However, for the configuration shown in FIG. 3, the grooves 132 are formed in the outer surface 112 of the substrate 110.

Various geometries for the grooves 132 with asymmetric cross-sections are described above. For example, for particular configurations, the base 134 of a respective groove 132 is at least 2 times wider than the top 146 of the respective groove 132. As noted above, the "base" is the lower portion of the groove, and includes the end portion 137 of the groove, where the two sides of the groove come together. For these asymmetric grooves, the base will typically be curved, at least in part, and will not be entirely flat. More particularly, the base 134 is at least 3 times wider than the top 146 of the respective groove 132, and still more particularly, is in a range of about 3-4 times wider than the top 146 of the respective groove 132.

The walls 138, 139 may be angled in a number of different orientations. Particular configurations are described above with reference to FIGS. 5-9.

Beneficially, incorporation of the above described asymmetric cooling channels serves to promote decreased channel openings for better coating durability, and to allow more flexibility in machining of channels on three-dimensional and spatially restricted surfaces. Commercially, this facilitates the use of more efficient designs with fewer compromises impacting performance and cost.

Although only certain features of the invention have been illustrated and described herein, many modifications and changes will occur to those skilled in the art. It is, therefore, to be understood that the appended claims are intended to cover all such modifications and changes as fall within the scope of the invention.

## Claims

1. A method of fabricating a component (100) comprising a substrate (110) having an outer surface (112) and an inner surface (116), wherein the inner surface defines at least one interior space (114), the fabrication method comprising:
forming at least one groove (132) in the outer surface of the substrate (110), wherein each groove extends at least partially along the outer surface of the substrate and has an asymmetric cross-section;
forming at least one access hole (140) in the substrate, wherein each access hole connects the respective groove in fluid communication with the respective interior space (114); and
disposing a coating (150,54) over at least a portion of the surface (112) of the substrate (110), such that the groove(s) and the coating together define one or more channels (130) for cooling the component.

2. The fabrication method of Claim 1, wherein each groove (132) is formed by directing an abrasive liquid jet (160) at the outer surface (112) of the substrate (110), wherein at least one groove (132) is formed by directing the abrasive liquid jet at a lateral angle (α) relative to the surface of the substrate in one or more passes of the abrasive liquid jet.

3. The fabrication method of Claim 2, wherein the step of forming the groove (132) further comprises performing at least one additional pass where the abrasive liquid jet (160) is directed toward a base (134) of the groove at one or more angles between the lateral angle and a direction (52) substantially normal to the outer surface of the substrate, such that material is removed from the base of the groove.

4. The fabrication method of any preceding Claim, wherein a base (134) of a respective groove (132) is at least 2 times wider than a top (146) of the respective groove.

5. The fabrication method of any preceding Claim, wherein a first wall (138) of a respective groove (132) is oriented at an angle φ in a range of about 10-80 degrees relative to a surface normal (52).

6. The fabrication method of Claim 5, wherein a second wall (139) of a respective groove (132) is oriented at an angle θ in a range of about 0-50 degrees relative to a surface normal (52).

7. The fabrication method of any preceding Claim, wherein the coating (150,54) is applied at an angle of incidence that is approximately normal to the outer surface (112) of the substrate (110).

8. The fabrication method of any preceding Claim, wherein the coating (150,54) is applied at an angle of incidence that is approximately orthogonal to a general angle of a short leg of the respective groove (132).

9. A method of fabricating a component (100) comprising a substrate (110) having an outer surface (112) and an inner surface (116), wherein the inner surface defines at least one interior space (114), the fabrication method comprising:
disposing a structural coating (54) on the outer surface of the substrate (110);
forming at least one groove (132) at least partially in the structural coating, wherein each groove extends at least partially along the outer surface of the structural coating and has an asymmetric cross-section;
forming at least one access hole (140) in the substrate, wherein each access hole connects the groove in fluid communication with the respective interior space (114); and
disposing a coating (150,54) over at least a portion of the surface of the structural coating, such that the groove(s) and the coating together define one or more channels for cooling the component (100).

10. A component (100) comprising:
a substrate (110) having an outer surface (112) and an inner surface (116), wherein the inner surface defines at least one interior space (114), wherein at least one groove (132) extends at least partially along the outer surface of the substrate and has an asymmetric cross-section, wherein at least one access hole (140) is formed in the substrate and connects each groove in fluid communication with the respective interior space; and
at least one coating (150,54) disposed over at least a portion of the surface of the substrate, such that the groove(s) and the coating together define one or more channels for cooling the component.

11. The component (100) of Claim 10, wherein the coating (54,150) comprises at least one of a structural coating, a bond coating, and a thermal barrier coating.

12. The component of (100) Claim 11, wherein the coating comprises at least an inner layer of a structural coating (54) disposed on the outer surface (112) of the substrate and an additional coating layer, and wherein the grooves (132) are formed at least partially in the structural coating (54).

13. The component (100) of Claim 12, wherein the grooves (132) are located entirely within the structural coating (54).

14. The component (100) of Claim 12, wherein the grooves (132) extend through the structural coating (54) into the substrate (110).

15. The component (100) of any of Claims 10 to 14, wherein a base (134) of a respective groove is at least 2 times wider than a top (146) of the respective groove.
